# EUROPEAN PATENT APPLICATION

(11) **EP 4 422 123 A1**
(43) Date of publication of application: **28.08.2024**
(21) Application number: 24158961.3
(22) Date of filing: 21.02.2024
(51) Int. Cl.: H04L 9/08, H04L 9/32

(54) **QUANTUM NETWORK SLICE SPECIFIC AUTHENTICATION AND AUTHORIZATION**

(30) Priority: 27.02.2023 US 202318175136
(71) Applicant: T-Mobile Innovations, LLC, Overland Park, KS 66251-2100 (US)
(72) Inventor: BALMAKHTAR, Marouane, Fairfax, 22030 (US)
(74) Representative: Suddaby, Mark Edward

(57) **Abstract**

Various embodiments comprise a wireless communication network configured to perform quantum authentication for a wireless User Equipment (UE). The wireless communication network comprises network quantum circuitry and network authentication circuitry. The network quantum circuitry selects polarization states for qubits. The network quantum circuitry generates and polarizes the qubits using the selected polarization states. The network quantum circuitry transfers the qubits to an enterprise network. The network authentication circuitry exchanges cryptography information indicating the selected polarization states, measured polarization states, and a wireless device ID with the enterprise network. The network authentication circuitry generates a cryptography key based on the selected polarization states and the measured polarization states and stores the cryptography key in association with the wireless device ID.

## Description

### BACKGROUND

Authentication entails the exchange of data between a wireless user device and a wireless communication network so the network can confirm the identity of the wireless user device. When the wireless user device attaches to a Fifth Generation (5G) network core over a Radio Access Network (RAN), the wireless user device registers with an Access and Mobility Management Function (AMF) to perform authentication. The AMF interacts with an Authentication Server Function (AUSF) and Unified Data Management (UDM) to generate a random number and an expected result. The wireless user device is given the random number to hash with its secret identity code and return the expected result. The AMF matches the two expected results to authenticate the wireless user device. Responsive to the authentication, the wireless user device receives wireless data services from the network core.

Quantum authentication uses the quantum properties of photons to generate secret identity codes. To generate a secret identity code, a quantum device encodes a photon with various quantum states like polarization and spin. The quantum device transfers the encoded photon to another quantum device over an optical interface like a quantum channel. The other quantum device determines the quantum states of the photon. The two quantum devices exchange data to select photons that have matching quantum states. The matching quantum states comprise the secret identity code for the two quantum devices.

Unfortunately, the network authentication systems do not effectively use quantum authentication to authenticate wireless user devices for service over external networks like enterprise networks, edge networks, and data networks. Moreover, the network authentication systems do not efficiently interface with external network elements to generate quantum derived secret identity codes.

### OVERVIEW

This Overview is provided to introduce a selection of concepts in a simplified form that are further described below in the Technical Description. This summary is not intended to identify key features or essential features of the claimed subject matter, nor is it intended to be used as an aid in determining the scope of the claimed subject matter.

Various embodiments of the present technology relate to solutions for wireless device authentication. Some embodiments comprise a method of operating a wireless communication network to perform quantum authentication for a wireless user device. The method comprises exchanging cryptography information indicating selected polarization states, measured polarization states, and a wireless device Identifier (ID) with an enterprise network. The method further comprises generating a cryptography key based on the selected polarization states and the measured polarization states. The method further comprises storing the cryptography key in association with the wireless device ID. The method further comprises receiving an attachment request from the wireless user device. The method further comprises generating an authentication challenge for the wireless user device based on the cryptography key. The method further comprises transferring the authentication challenge to the user device. The method further comprises utilizing the cryptography key to validate an authentication response received from the user device. The method further comprises authenticating the user device in response to the validation.

Some embodiments comprise a wireless communication network configured to perform quantum authentication for a wireless User Equipment (UE). The wireless communication network comprises network quantum circuitry and network authentication circuitry. The network quantum circuitry is configured to select polarization states for qubits. The network quantum circuitry is further configured to generate and polarize the qubits using the selected polarization states. The network quantum circuitry is further configured to transfer the qubits to an enterprise network. The network authentication circuitry is configured to exchange cryptography information indicating the selected polarization states, measured polarization states, and a wireless device ID with the enterprise network. The network authentication circuitry is further configured to generate a cryptography key based on the selected polarization states and the measured polarization states. The network authentication circuitry is further configured to store the cryptography key in association with the wireless device ID.

Some embodiments comprise a method of operating a wireless communication network to perform quantum authentication for a wireless user device. The method includes selecting polarization states for qubits. The method further includes generating and polarizing the qubits using the selected polarization states. The method further includes transferring the qubits to an enterprise network. The method further includes exchanging cryptography information indicating the selected polarization states, measured polarization states, and a wireless device Identifier (ID) with the enterprise network. The method further includes generating a cryptography key based on the selected polarization states and the measured polarization states. The method further includes storing the cryptography key in association with the wireless device ID.

### DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates a wireless communication network to perform quantum authentication for a wireless User Equipment (UE).
Figure 2 illustrates an exemplary operation of the wireless communication network to perform quantum authentication for the wireless UE.
Figure 3 illustrates a wireless communication network to perform quantum authentication for a wireless UE.
Figure 4 illustrates an exemplary operation of the wireless communication network to perform quantum authentication for the wireless UE.
Figure 5 illustrates another exemplary operation of the wireless communication network to perform quantum authentication for the wireless UE.
Figure 6 illustrates a Fifth Generation (5G) communication network to perform quantum authentication for UEs.
Figure 7 illustrates a Third Generation Partnership Project (3GPP) UE in the 5G communication network.
Figure 8 illustrates a non-3GPP UE in the 5G communication network.
Figure 9 illustrates a 5G Radio Access Network (RAN) in the 5G communication network.
Figure 10 illustrates a non-3GPP access node in the 5G communication network.
Figure 11 illustrates quantum authentication interfaces in the 5G communication network.
Figure 12 illustrates a Network Function Virtualization Infrastructure (NFVI) in the 5G communication network.
Figure 13 further illustrates the NFVI in the 5G communication networks.
Figure 14 illustrates an exemplary operation of the 5G communication network to perform quantum authentication for the UEs.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### TECHNICAL DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

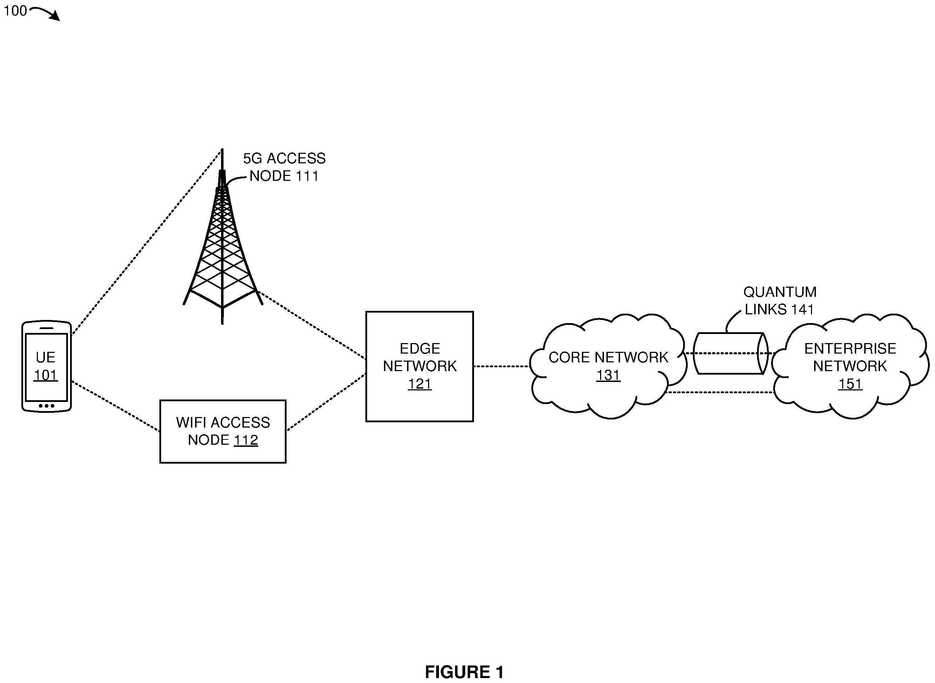

Figure 1 illustrates wireless communication network 100 network to perform quantum authentication for wireless User Equipment (UE) 101. Wireless communication network 100 delivers services to UE 101 like machine communications, internet-access, media-streaming, or some other wireless communications product. Wireless communication network 100 comprises UE 101, Fifth Generation (5G) access node 111, WiFi access node 112, edge network 121, core network 131, quantum links 141, and enterprise network 151.

Various examples of network operation and configuration are described herein. In some examples, core network 131 receives cryptography data. The cryptography data comprises the selected polarization states and measured polarization states from a Quantum Key Distribution (QKD) process between core network 131 and enterprise network 151. The cryptography data further comprises a device Identifier (ID) associated with UE 101. For example, core network 131 and enterprise network 151 may exchange qubits over quantum links 141 to implement the QKD process. Core network 131 and enterprise network 151 generate a cryptography key based on the measured polarization states and the selected polarization states. Core network 131 and enterprise network 151 store the cryptography key in association with the device ID for UE 101. Core network 131 receives an attachment request from UE 101. For example, UE 101 may attach to 5G access node 111 and/or Wifi access node 112 and transfer an attachment request for service on enterprise network 151 via the access node(s) and edge network 121. Core network 131 transfers an authentication challenge to the user device and utilizes the cryptography key to validate an authentication response received from the user device. Core network 131 authenticates the user device in response to the validation.

Wireless communication network 100 provides wireless data services to wireless user devices like UE 101. Exemplary wireless data services include machine-control, internet-access, media-streaming, and social-networking. Exemplary wireless user devices comprise phones, computers, vehicles, robots, and sensors. 5G access node 111 and access node 112 are examples of a Radio Access Network (RANs). RANs exchange wireless signals with the wireless user devices over radio frequency bands. The wireless signals use wireless network protocols like Fifth Generation New Radio (5GNR), Long Term Evolution (LTE), Institute of Electrical and Electronic Engineers (IEEE) 802.11 (WIFI), and Low-Power Wide Area Network (LP-WAN). The RANs exchange network signaling and user data with network elements that are often clustered together into wireless network cores like core network 131. The RANs are connected to the wireless network cores over backhaul data links. Edge network 121 may be representative of internet backbone providers, edge computing systems, or another type of edge system to provide the backhaul data links between nodes 111-112 and core network 131.

The RANs (e.g., 5G access node 111) comprise Radio Units (RUs), Distributed Units (DUs) and Centralized Units (CUs). The RUs may be mounted at elevation and have antennas, modulators, signal processors, and the like. The RUs are connected to the DUs which are usually nearby network computers. The DUs handle lower wireless network layers like the Physical Layer (PHY) and Media Access Control (MAC). The DUs are connected to the CUs which are larger computer centers that are closer to the network cores. The CUs handle higher wireless network layers like the Radio Resource Control (RRC) and Packet Data Convergence Protocol (PDCP). The CUs are coupled to network functions in the network cores (e.g., core network 131 and enterprise network 151). The network cores execute the network functions to provide wireless data services to the wireless user devices over the RANs. Exemplary network functions include Access and Mobility Management Functions (AMFs), Authentication Server Functions (AUSF), and Unified Data Managements (UDMs).

Enterprise network 151 is an example of a non-public network. The non-public networks may operate in a stand-alone mode or a non-stand-alone mode and rely on one or more services provided core network 131 to operate. Non-public networks interface with Public Land Mobility Networks (PLMNs) to authenticate and authorize wireless user devices for data services on the enterprise networks. Typically, wireless user devices require special permission to access a non-public network. Enterprise network 151 utilizes systems like Authorization, Authentication, and Accounting (AAA) servers and data registries to maintain the credentials for user devices that are allowed to access enterprise network 151. Core network 131 and enterprise network are coupled via classical communication links and quantum links 141. Quantum links 141 may comprise glass, free-space links, metallic links, or another type of link capable of transferring quantum data like qubits.

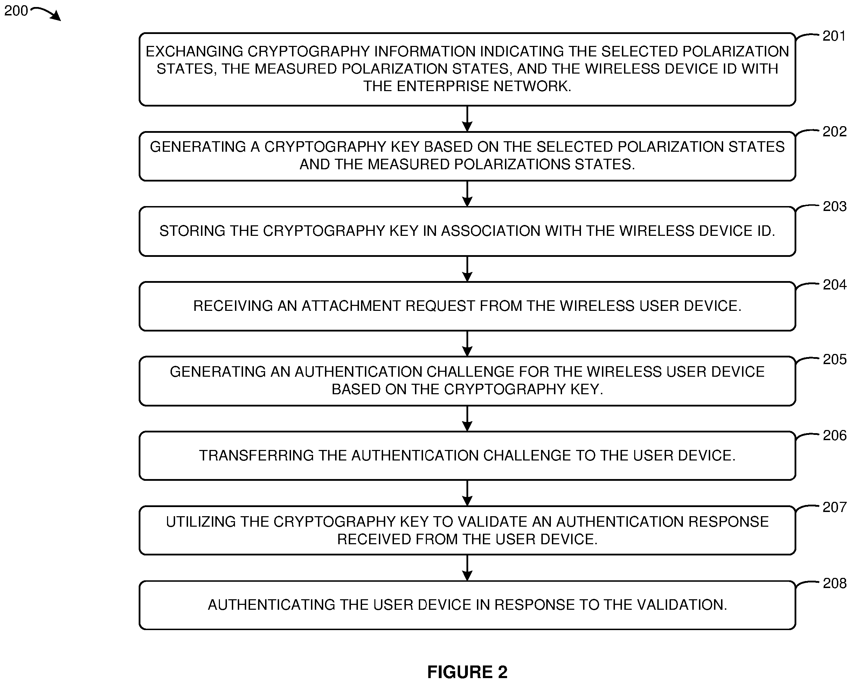

Figure 2 illustrates process 200. Process 200 comprises an exemplary operation of wireless communication network 100 to perform quantum authentication for wireless UE 101. The operation may vary in other examples. The operations of process 200 comprise exchanging cryptography information indicating the selected polarization states, the measured polarization states, and the wireless device ID with an enterprise network (step 201). The operations further comprise generating cryptography key based on the selected polarization states and the measured polarization states (step 202). The operations further comprise storing the cryptography key in association with the wireless device ID (step 203). The operations further comprise receiving an attachment request from the wireless user device (step 204). The operations further comprise generating an authentication challenge for the wireless user device based on the cryptography key (step 205). The operations further comprise transferring the authentication challenge to the user device (step 206). The operations further comprise utilizing the cryptography key to validate an authentication response received from the user device (step 207). The operations further comprise authenticating the user device in response to the validation (step 208).

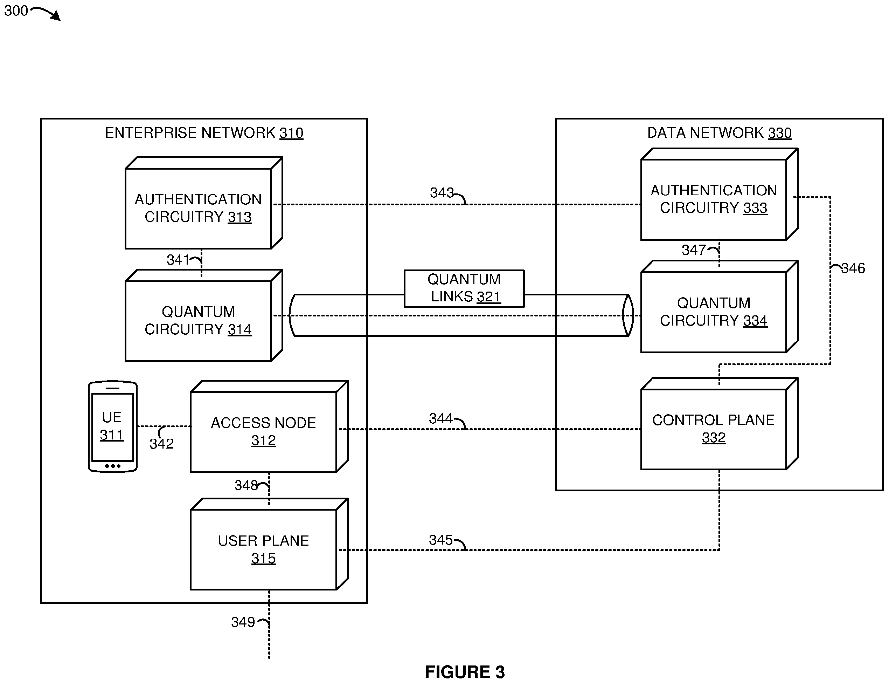

Figure 3 illustrates wireless communication network 300 network to perform quantum authentication for wireless UE 311. Wireless communication network 300 is an example of communication network 100, however network 100 may differ. Wireless communication network 300 comprises enterprise network 310, wireless UE 311, access node 312, authentication circuitry 313, quantum circuitry 314, user plane 315, quantum links 321, data network 330, control plane 332, authentication circuitry 333, quantum circuitry 334, and links 341-349. Quantum links 321 couple quantum circuitry 314 in enterprise network 310 to quantum circuitry 334 in data network 330.

In some examples, quantum circuitry 334 selects polarization states for qubits. Quantum circuitry 334 generates and polarizes the qubits using the selected polarization states. For example, quantum circuitry 334 may horizontally polarize a first photon, vertically polarize a second photon, and diagonally polarize a third photon. Quantum circuitry 334 transfers the polarized qubits to quantum circuitry 314 in enterprise network 310 over quantum links 321. Subsequently, authentication circuitry 333 exchanges cryptography information characterizing the qubit transfer with authentication circuitry 313 over classical communication channels. The cryptography information includes the selected polarization states used to polarize the transferred qubits, the measured polarization states reported by quantum circuitry 314, and a wireless device Identifier (ID) for UE 311. Authentication circuitry 333 generates a cryptography key based on the selected polarization states and the measured polarization states. Authentication circuitry 333 stores the cryptography key in association with the wireless device ID. The cryptography key may be used to authenticate UE 311 to access enterprise network 310.

Advantageously, authentication circuitry 333 and quantum circuitry 334 effectively use Quantum Key Distribution (QKD) to generate a quantum derived key for use in authenticating UE 311. Moreover, enterprise network 310 and data network 330 efficiently interface to generate and distribute quantum derived keys for use in authenticating UE 311 to access enterprise network 310.

UE 311 and access node 312 communicate over links using wireless/wired technologies like Fifth Generation New Radio (5GNR), Long Term Evolution (LTE), Low-Power Wide Area Network (LP-WAN), Institute of Electrical and Electronic Engineers (IEEE) 802.11 (WIFI), Bluetooth, and/or some other type of wireless or wireline networking protocol. The wireless technologies use electromagnetic frequencies in the low-band, mid-band, high-band, or some other portion of the electromagnetic spectrum. The wired connections comprise metallic links, glass fibers, and/or some other type of wired interface. Quantum circuitry 314 and quantum circuitry 334 communicate over quantum links 321. Quantum links 321 comprise metallic links, glass fibers, quantum repeaters, vacuums, and/or other types of mediums that can transfer quantum information. Quantum links 321 supports quantum authentication technologies like Quantum Key Distribution (QKD), quantum cryptography, and/or other types of quantum-based cryptography protocols. Access node 312, authentication circuitry 313, quantum circuitry 314, user plane 315, control plane 332, authentication circuitry 333, and quantum circuitry 334 communicate over various links that use metallic links, glass fibers, radio channels, or some other communication media. The links use Fifth Generation Core (5GC), IEEE 802.3 (ENET), Time Division Multiplex (TDM), Data Over Cable System Interface Specification (DOCSIS), Internet Protocol (IP), General Packet Radio Service Transfer Protocol (GTP), 5GNR, LTE, WIFI, virtual switching, inter-processor communication, bus interfaces, and/or some other data communication protocols.

UE 311 comprises a vehicle, drone, robot, computer, phone, sensor, or another type of data appliance with wireless and/or wireline communication circuitry. Access node 312 may comprise a tower, another type of mounting structure, or no mounting structure at all. Access node 312 comprises a Fifth Generation (5G) Radio Access Network (RAN), LTE RAN, gNodeB, eNodeB, NB-IoT access node, LP-WAN base station, wireless relay, WIFI hotspot, Bluetooth access nodes, and/or another wireless or wireline network transceiver. UE 311 and access node 312 comprise antennas, amplifiers, filters, modulation, analog/digital interfaces, microprocessors, software, memories, transceivers, bus circuitry, and the like. Control plane 332 comprises network functions like Access and Mobility Management functions (AMFs), Session Management Functions (SMFs), and the like. Authentication circuitries 313 and 333 comprises network functions like Authentication Server Functions (AUSFs), Authentication Authorization and Accounting (AAA) servers, Policy Control Functions (PCFs), Unified Data Managements (UDMs), Network Slice-specific and Stand-alone non-private network Authentication and Authorization Functions (NSSAAFs), non-3GPP Interworking Functions (N3IWFs), and the like. Quantum circuitries 314 and 334 comprise quantum capable network functions like a quantum capable NSSAAF, quantum capable AAA, quantum capable UDM, and the like. UE 311, enterprise network 310, and data network 330 comprise microprocessors, software, memories, transceivers, bus circuitry, and the like. The microprocessors comprise Digital Signal Processors (DSP), Central Processing Units (CPU), Graphical Processing Units (GPU), Application-Specific Integrated Circuits (ASIC), and/or the like. The memories comprise Random Access Memory (RAM), flash circuitry, disk drives, and/or the like. The memories store software like operating systems, user applications, radio applications, and network functions. The microprocessors retrieve the software from the memories and execute the software to drive the operation of wireless communication network 300 as described herein.

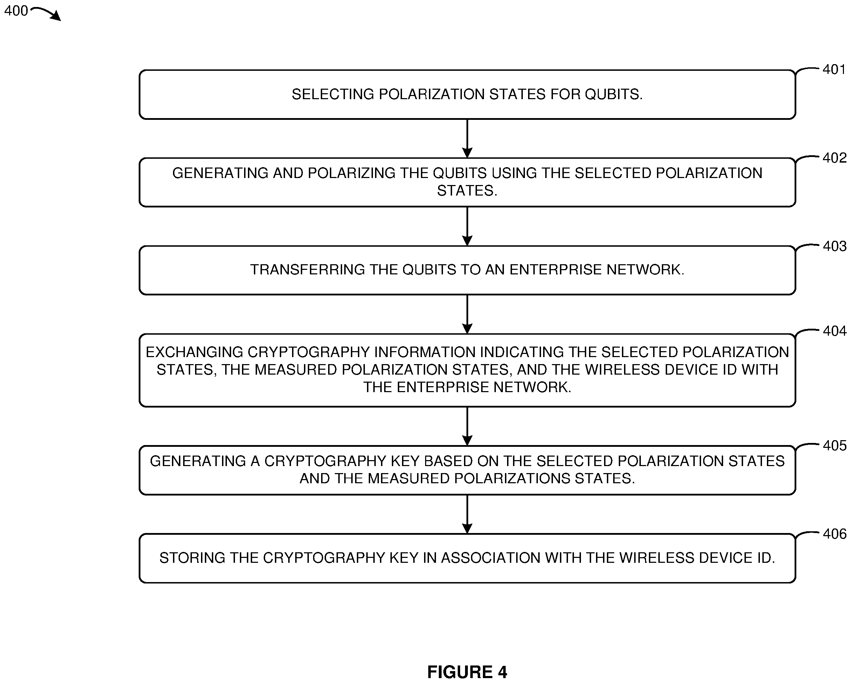

Figure 4 illustrates process 400. Process 400 comprises an exemplary operation of wireless communication network 300 to perform quantum authentication for wireless UE 311. The operation may vary in other examples. The operations of process 400 comprise selecting polarization states for qubits (step 401). The operations further comprise generating and polarizing the qubits using the selected polarization states (step 402). The operations further comprise transferring the qubits to an enterprise network (step 403). The operations further comprise exchanging cryptography information indicating the selected polarization states, the measured polarization states, and the wireless device ID with an enterprise network (step 404). The operations further comprise generating cryptography key based on the selected polarization states and the measured polarization states (step 405). The operations further comprise storing the cryptography key in association with the wireless device ID (step 406).

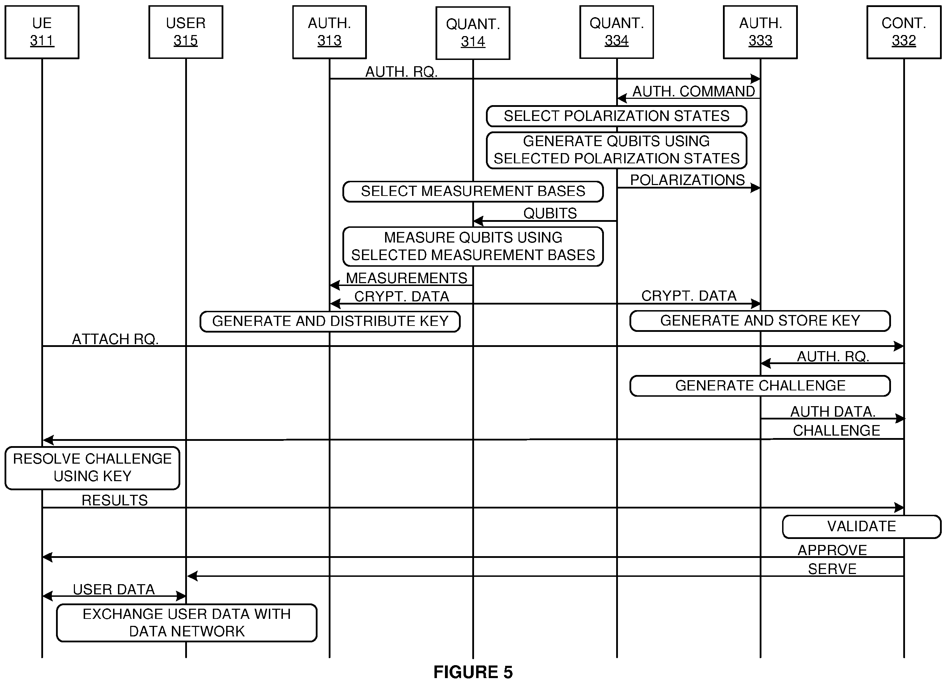

Figure 5 illustrates an exemplary operation of wireless communication network 300 to perform quantum authentication for wireless UE 311. The operation may vary in other examples.

Authentication circuitry 313 in enterprise network 310 transfers a quantum authentication request to authentication circuitry 333 to generate a quantum derived key for UE 311. Authentication circuitry 333 processes the authentication request and determines the request comprises a quantum authentication request. In response, authentication circuitry 313 acknowledges the request and directs quantum circuitry 334 to initiate a quantum key distribution process. Authentication circuitry 313 receives the acknowledgement and responsively directs quantum circuitry 314 in enterprise network 310 to participate in the quantum key distribution process with quantum circuitry 334 in data network 330.

Quantum circuitry 334 selects a set of polarization bases to polarize qubits like photons. The polarization bases may be selected randomly. For example, quantum circuitry 334 may select a rectilinear polarization basis for a first qubit, a diagonal polarization basis for a second qubit, and a diagonal polarization basis for a third qubit. However, it should be appreciated that other polarization schemes are usable. For example, the polarization schemes may correspond to specific types of UEs. Each enterprise network and their associated UEs may have a different set of requirements. For example, UEs associated with enterprise network 310 may require continuous polarization rotation when polarizing qubits during QKD. Quantum circuitry 334 indicates the selected polarization bases to authentication circuitry 333. Quantum circuitry 334 generates a set of qubits and polarizes the qubits according to the selected polarization bases. Quantum circuitry 334 transfers the polarized qubits to quantum circuitry 314 in enterprise network 310 over quantum links 321. For example, quantum circuitry 334 may comprise a laser diode to generate and transfer the polarized qubits and quantum links 321 may comprise a quantum capable glass channel that carries the set of polarized photons over the glass channel for delivery to quantum circuitry 314.

Prior to receiving the qubits, quantum circuitry 314 selects a set of measurement bases to measure the qubits transmitted by quantum circuitry 334. The measurement bases may be selected randomly. For example, quantum circuitry 314 may select a rectilinear polarization basis to measure a first qubit, a rectilinear polarization basis to measure a second qubit, and a diagonal polarization basis to measure a third qubit. Typically, when the selected measurement basis matches or otherwise corresponds to the selected polarization basis of a qubit, the measured polarization will match the selected polarization. Likewise, when the selected measurement basis differs from or otherwise does not correspond to the selected polarization basis of a qubit, the measured polarization will differ from the selected polarization. For example, measuring a rectilinearly polarized qubit using a diagonal measurement basis will not detect the original rectilinear polarization.

Quantum circuitry 314 receives the qubits via quantum links 321 and measures each received qubit using the selected measurement bases. Quantum circuitry 314 reports the measured polarizations of the qubits to authentication circuitry 313. Authentication circuitry 313 and authentication circuitry 333 exchange cryptography data indicating the selected polarizations, the measured polarizations, and a device ID associated with UE 311. Authentication circuitry 313 and authentication circuitry 333 generate a quantum derived authentication key based on the measured polarization states, the selected polarization states, and the qubit values. For example, authentication circuitry 313 and authentication circuitry 333 may derive the key based on the qubit values of qubits where the measured polarization state matched the selected polarization state. Authentication circuitry 333 stores the quantum derived key in association with the device ID of UE 311. For example, authentication circuitry 333 may act as a credential holder and store the key in association with a subscriber profile of UE 311. In other examples, authentication circuitry 313 in enterprise network 310 may act as the credential holder instead of (or in addition to) authentication circuitry 333. Authentication circuitry 313 provisions UE 311 with the key for use in accessing enterprise network 310 over a secure and authenticated link.

UE 311 attaches to access node 312. UE 311 transfers an attachment request to control plane 332 via access node 312. The attachment request identifies UE 311 and comprises a service request for enterprise network 310. Control plane 332 detects the request to access enterprise network 310 and responsively transfers an authentication request to authentication circuitry 333 to validate the identify of UE 311. For example, the service request for enterprise network 310 may cause control plane 332 to trigger a Network Slice Specific Authentication and Authorization (NSSAA) procedure. In response, authentication circuitry 333 retrieves authentication data for UE 311. The authentication data includes permissions to access the enterprise network and the quantum derived key. Authentication circuitry 333 generates an authentication challenge using the quantum derived key and forwards the challenge to control plane 332. For example, the authentication challenge may comprise a random number challenge. Alternatively, in examples where authentication circuitry 313 acts as the credential holder for UE 311, authentication circuitry 333 may instead forward the authentication request to authentication circuitry 313 in enterprise network 310. Authentication circuitry 313 in enterprise network 310 may then retrieve the authentication data including the quantum derived key and generate the authentication challenge for delivery to UE 311. Returning to the operation, Control plane 332 transfers the authentication challenge to UE 311. UE 311 uses its copy of quantum derived key provisioned by authentication circuitry 313 to resolve the authentication challenge received from control plane 332. UE 311 generates authentication results and returns the results to control plane 332 via access node 312. For example, UE 311 may use its quantum derived key to hash a random number challenge and generate authentication results.

Control plane 332 receives the authentication results generated by UE 311 and compares the generated results to an expected result. If the results match, control plane 332 validates the identify of UE 311. Control plane 332 signals an attachment approved message to UE 311 and directs user plane 315 to serve UE 311. UE 311 exchanges user data with user plane 315 over access node 312. User plane 315 exchanges the user data with a data network.

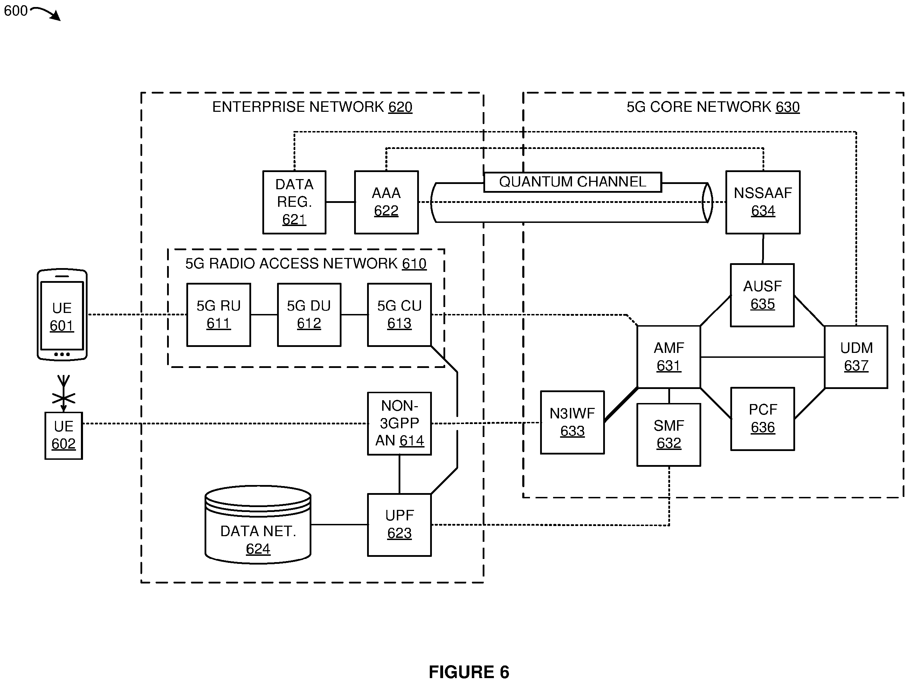

Figure 6 illustrates Fifth Generation (5G) communication network 600 to perform quantum authentication for UEs 601 and 602. 5G communication network 600 comprises an example of wireless communication networks 100 and 300, although networks 100 and 300 may differ. 5G communication network 600 comprises Third Generation Partnership Project (3GPP) UE 601, non-3GPP UE 602, 5G RAN 610, non-3GPP access node 614, enterprise network 620, and 5G core network 630. Enterprise network 620 comprises data registry 621, AAA server 622, UPF 623, and data network 624. 5G core network 630 comprises AMF 631, SMF 632, N3IWF 633, NSSAAF 634, AUSF 635, PCF 636, and UDM 637. 3GPP UE 601 comprises a smartphone that communicates over wireless 3GPP links like Fifth Generation New Radio (5GNR) and Long Term Evolution (LTE). Non-3GPP UE 602 comprises a sensor that communicates over wired and/or wireless non-3GPP links like Institute of Electrical and Electronic Engineers (IEEE) 802.11 (WIFI) and IEEE 802.3 (ENET). 5G RAN 610 comprises 5G Radio Unit (RU) 611, 5G Distributed Unit (DU) 612, and 5G Centralized Unit (CU) 613. Other network functions and network elements are typically present in enterprise network 620 and 5G network core 630 but are omitted for clarity. Although AAA server 622 is illustrated residing in enterprise network 620, in some examples, AAA server 622 instead resides in 5G core network 630.

AAA server 622 possesses a secure communication channel with NSSAAF 634. AAA server 622 transfers a key generation request for delivery to UDM 637 to initiate a Quantum Key Distribution (QKD). The QKD procedure comprises QKD protocols like a BB84 protocol, an E91 protocol, a Device Independent Quantum Key Distribution (DIQKD) protocol, a Twin Fields Quantum Key Distribution (TFQKD) protocol, and/or another type of QKD protocol. Generally, QKD procedures rely on quantum mechanical properties of qubits to securely generate keys. The quantum mechanical properties allow the key generation participants to detect when an eavesdropper has interfered with the key generation.

UDM 637 accepts the QKD request and directs quantum capable NSSAAF 634 to participate in the QKD procedure with AAA server 622. NSSAAF 634 selects a set of polarization bases to polarize qubits in the QKD procedure. The polarization bases may include a rectilinear polarization basis, a diagonal polarization basis, and/or another type of polarization basis. For example, qubits polarized using a rectilinear polarization basis may comprise electromagnetic waves polarized in a vertical sinusoidal plane or electromagnetic waves polarized in a horizontal sinusoidal plane. For example, qubits polarized using a diagonal polarization basis may comprise electromagnetic waves polarized in a 45° sinusoidal plane or electromagnetic waves polarized in a 135° sinusoidal plane, the angles being relative to the orientation of the qubit transmitter. NSSAAF 634 indicates the selected set of polarization bases and corresponding qubit values to UDM 637.

NSSAAF 634 generates and polarizes a set of qubits using the set of selected polarization bases. NSSAAF 634 transfers the polarized qubits over a quantum channel to quantum capable AAA server 622 in enterprise network core 620. The qubits may comprise entangled or non-entangled qubits. For example, NSSAAF 634 may entangle pairs of photons and transfer one of the photons from each entangled pair over the quantum channel. The quantum channels comprise optical interfaces, metallic links, glass fibers, vacuums, and/or some other type of interface that can transfer quantum information. The length of the quantum channels is not limited. For example, the quantum channels may exceed ten miles in length. Typically, when the length of the quantum channels is excessive, the quantum channel will comprise one or more quantum repeaters. In the case where a quantum repeater(s) is used, the quantum repeater receives a polarized qubit from NSSAAF 634. The quantum repeater then entangles the polarized qubit received from NSSAAF 634 with a qubit resident in the quantum repeater. The entanglement transfers the polarization state of the qubit sent by NSSAAF 634 to the qubit resident in the quantum repeater. The quantum repeater then transfers the entangled qubit to AAA server 622 (or another repeater) over the quantum channel.

AAA server 622 receives the polarized qubits generated by NSSAAF 634. AAA server 622 selects a measurement basis for each of the qubits received over the quantum channel. For example, AAA server 622 may select a rectilinear measurement basis for a first qubit and may select a diagonal measurement basis for a second qubit. AAA server 622 measures the polarization states of the received qubits using the corresponding measurement basis for each of the received qubits. AAA server 622 indicates the measured polarizations of the received qubits to data registry 621 in enterprise network 620. Data registry 621 possesses a secure communication link with UDM 637. UDM 637 and data registry 621 exchange cryptography information over the secure communication link that includes the qubit values, the selected polarization bases, and the measured polarization bases. UDM 637 and data registry 621 generate a quantum derived authentication key based on the values of qubits where the measured polarization matches selected polarization. Typically, when the selected polarization basis differs from the selected measurement basis for a qubit, the determined polarization will differ from the selected polarization. Enterprise network 620 and 5G core network 630 may repeat the QKD procedure to generate multiple quantum derived authentication keys. For example, enterprise network 620 and 5G core network 630 may repeat the QKD procedure when a quantum derived key expires and/or reauthentication is needed. Data registry 621 provisions UE 601 and UE 602 with copies of the quantum derived authentication keys and stores corresponding copies of the keys in subscriber profiles associated with UE 601 and UE 602. In some examples, UDM 637 also stores the quantum derived authentication keys in association with subscriber profiles for UE 601 and UE 602 when UDM 637 acts as the credential holder. It should be appreciated that the credential holder may reside in either enterprise network 620 or network core 630. For example, AAA server 622 may instead reside in 5G core network.

3GPP UE 601 wirelessly attaches to RU 611 and transfers attachment signaling to CU 613 over RU 611 and DU 612. CU 613 establishes a Radio Resource Control (RRC) connection with UE 601. CU 613 transfers a registration request for UE 601 to AMF 631. The registration request indicates a request to attach to enterprise network 620. AMF 631 detects the request to attach to enterprise network 620 and responsively triggers NSSAA. AMF 631 transfers an identity request for UE 601 to CU 613. For example, a Security Anchor Function (SEAF) in AMF 631 may receive the registration request and responsively transfer the identity request to CU 613. CU 613 forwards the identity request to UE 601 over DU 612 and RU 611. In response, UE 601 indicates its identity to CU 613 over RU 611 and DU 613. CU 613 forwards the identity indication for UE 601 to AMF 631. AMF 631 selects AUSF 635 to authenticate UE 601 for wireless services. AMF 631 transfers an authentication request for UE 601 to AUSF 635 and indicates the Network Slice Specific Authentication and Authorization (NSSAA) trigger.

In response to the NSSAA trigger, AUSF 635 selects NSSAAF 634 to authenticate UE 601 for service on enterprise network 620. For example, AUSF 635 may identify NSSAAF 634 based on network realm information in a Subscriber Permanent Identifier (SUPI) of UE 601 retrieved from UDM 637. AUSF 635 transfers the authentication request for UE 601 to NSSAAF 634. NSSAAF 634 processes the authentication request and determines AAA server 622 is the credential holder associated with the identity indicated by UE 601. NSSAAF 634 selects AAA server 622 based on the association and generates quantum slice authentication context for UE 601. For example, the authentication request received by NSSAAF 634 may comprise the SUPI for UE 601 and NSSAAF 634 may determine AAA server 622 is the credential holder for UE 601 based on the network realm indicated by the SUPI for UE 601. NSSAAF 634 transfers the authentication request message with an Extensible Authentication Protocol (EAP) extension to AAA server 622. The authentication request may comprise relevant authentication information like device ID and authentication type. AAA server 622 receives the request and responsively retrieves authentication keys for UE 601 from data registry 621. Data registry 621 indicates the quantum derived authentication key for UE 601 to AAA 622. For example, an Authentication Credential Repository and Processing Function (ARPF) in data registry 621 may generate authentication vectors based on the quantum derived key and indicate the authentication vectors to AAA 622.

AAA 622 generates an expected result based on the quantum derived authentication key for UE 601 and a random number. In some examples, the quantum capability of AAA server 622 allows for Quantum Random Number Generation (QRNG). QRNG entails measuring changes in quantum states to generate a random result. For example, AAA server 622 may leverage quantum phase fluctuation of a distributed feedback laser to implement QRNG. In other examples, AAA server 622 may utilize classical (i.e., non-quantum) random number generation techniques. AAA 622 transfers the random number and the expected result for UE 601 to NSSAAF 634. NSSAAF 634 forwards the random number and the expected result to AUSF 635 which in turn forwards the information to AMF 631. AMF 631 indicates the authentication method and transfers the random number for UE 601 to CU 613. CU 613 forwards the random number and indicated authentication method to UE 601 over DU 612 and RU 611. UE 601 identifies the authentication method and responsively hashes the random number with its quantum derived authentication key to generate the same expected result. UE 601 transfers the expected result to CU 613. CU 613 forwards the expected result to AMF 631. AMF 631 matches the two expected results to authenticate the identity of UE 601. In some examples, AUSF 635 interfaces with PCF 636 and UDM 637 to assist in authenticating UE 601.

Responsive to the authentication and authorization, AMF 631 requests UE context for UE 601 from UDM 637. UDM 637 transfers UE context for UE 601 to AMF 631. The UE context comprises Quality-of-Service (QoS) metrics, slice identifiers, network addresses, and the like. AMF 631 retrieves service policies for UE 601 from PCF 636. AMF 631 selects SMF 632 to establish a Protocol Data Unit (PDU) session for UE 601 based on the UE context and the service policies. SMF 632 selects UPF 623 to establish the PDU session for UE 601. SMF 632 transfers session context for the PDU session to AMF 631. AMF 631 transfers the session context to UE 601 over RAN 610. UE 601 begins the PDU session based on the session context. UE 601 wirelessly exchanges user data with CU 613 over RU 611 and DU 612. CU 613 exchanges the user data with UPF 623. UPF 623 exchanges the user data with data network 624.

Non-3GPP UE 602 wirelessly attaches to non-3GPP access node 614. UE 602 transfers attachment signaling to non-3GPP access node 614. Non-3GPP access node 614 establishes a connection with UE 602 and transfers a registration request for UE 602 to AMF 631 via N3IWF 633. The registration request indicates a request to attach to enterprise network 620. AMF 631 transfers an identity request for UE 602 to non-3GPP access node 614. Non-3GPP access node 614 forwards the identity request to UE 602. In response, UE 602 indicates its identity to non-3GPP access node 614. Non-3GPP access node 614 forwards the identity indication for UE 602 to AMF 631. AMF 631 selects AUSF 635 to authenticate UE 602 for wireless services on enterprise network 620. AMF 631 transfers an authentication request for UE 602 to AUSF 635.

In response to the request to access enterprise network 620, AUSF 635 selects NSSAAF 634 to interface with AAA server 622 in enterprise network 620. AUSF 635 transfers the authentication request for UE 602 to NSSAAF 634. NSSAAF 634 processes the authentication request and determines AAA server 622 is the credential holder associated with the identity of UE 602. NSSAAF 634 transfers the authentication request message with an EAP extension to AAA server 622. AAA server 622 receives the request and responsively retrieves authentication keys for UE 602 from data registry 621. Data registry 621 indicates the quantum derived authentication key for UE 602 to AAA 622.

AAA 622 generates an expected result based on the quantum derived authentication key for UE 602 and a random number. AAA 622 transfers the random number and the expected result for UE 602 to NSSAAF 634. NSSAAF 634 forwards the random number and the expected result to AUSF 635 which in turn forwards the information to AMF 631. AMF 631 indicates the authentication method and transfers the random number for UE 602 to access node 614. Non-3GPP access node 614 forwards the random number and indicated authentication method to UE 602. UE 602 identifies the authentication method and responsively hashes the random number with its quantum derived authentication key to generate the same expected result. UE 602 transfers the expected result to access node 614. Access node 614 forwards the expected result to AMF 631 via N3IWF 633. AMF 631 matches the two expected results to authenticate the identity of UE 602. In some examples, AUSF 635 interfaces with PCF 636 and UDM 637 to assist in authenticating UE 602.

Responsive to the authentication and authorization, AMF 631 requests UE context for UE 602 from UDM 637. UDM 637 transfers UE context for UE 602 to AMF 631. The UE context comprises QoS metrics, slice identifiers, network addresses, and the like. AMF 631 retrieves service policies for UE 602 from PCF 636. AMF 631 selects SMF 632 to establish a PDU session for UE 602 based on the UE context and the service policies. SMF 632 selects UPF 623 to establish the data session for UE 602. SMF 632 transfers session context for the data session to AMF 631. AMF 631 transfers the session context to UE 602 over non-3GPP access node 614 and N3IWF 633. UE 602 begins the data session based on the session context. UE 602 wirelessly exchanges user data with non-3GPP access node 614. non-3GPP access node 614 exchanges the user data with UPF 623. UPF 623 exchanges the user data with data network 624.

In some examples, 5G communication network 600 comprises a trusted third party qubit service to provide qubit generation and measurement operations on behalf of enterprise network 620 and 5G core network 630. For example, the trusted third-party qubit service may comprise qubit transmitters, quantum channels, and qubit receivers to securely generate, polarize, and measure qubits. The qubit service securely generates cryptography data indicating measured polarization states, selected polarization states, and qubit values. The qubit service provisions the cryptography data to 5G core network 630 and enterprise network 620 for use in generating quantum derived keys for UEs 601 and 602. For example, the qubit transmitter of the qubit service may transfer polarization data to core network 630 without broadcasting the polarization data to the qubit receiver. Likewise, the qubit receiver of the qubit service may transfer measurement data to enterprise network 620 without broadcasting the measurement data to the qubit transmitter. In doing so, the information needed to generate the quantum derived key remains concealed from the trusted third-party qubit service and allows core network 630 and enterprise network 620 to securely generate a quantum derived key. Upon receiving the cryptography information from the third-party qubit service, enterprise network 620 and core network 630 exchange their portions of the cryptography information to generate the quantum derived key.

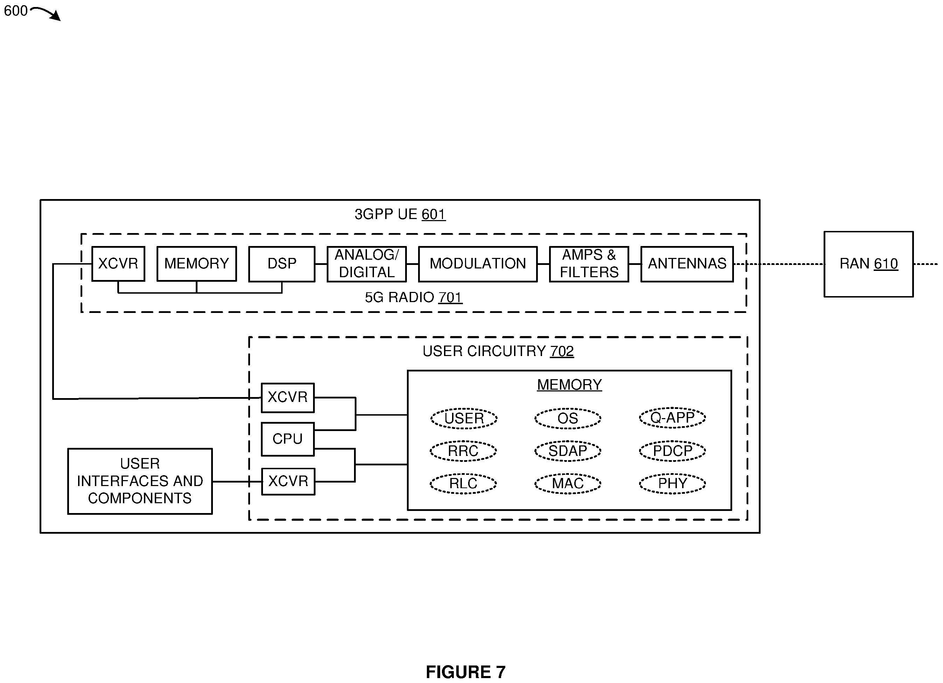

Figure 7 illustrates 3GPP UE 601 5G communication network 600. UE 601 comprises an example of UE 311, although UE 311 may differ. UE 601 comprises 5G radio 701 and user circuitry 702. Radio 701 comprises antennas, amplifiers, filters, modulation, analog-to-digital interfaces, Digital Signal Processers (DSP), memory, and transceivers (XCVRs) that are coupled over bus circuitry. User circuitry 702 comprises memory, CPU, user interfaces and components, and transceivers that are coupled over bus circuitry. The memory in user circuitry 702 stores an operating system (OS), user applications (USER), Quantum Application (Q-APP) and SGNR network applications for Physical Layer (PHY), Media Access Control (MAC), Radio Link Control (RLC), Packet Data Convergence Protocol (PDCP), Service Data Adaptation Protocol (SDAP), and Radio Resource Control (RRC). The antenna in radio 701 is wirelessly coupled to 5G RAN 610 over a SGNR link. A transceiver in radio 701 is coupled to a transceiver in user circuitry 702. A transceiver in user circuitry 702 is typically coupled to the user interfaces and components like displays, controllers, and memory.

In radio 701, the antennas receive wireless signals from 5G RAN 610 that transport downlink 5GNR signaling and data. The antennas transfer corresponding electrical signals through duplexers to the amplifiers. The amplifiers boost the received signals for filters which attenuate unwanted energy. Demodulators down-convert the amplified signals from their carrier frequency. The analog/digital interfaces convert the demodulated analog signals into digital signals for the DSPs. The DSPs transfer corresponding SGNR symbols to user circuitry 702 over the transceivers. In user circuitry 702, the CPU executes the network applications to process the SGNR symbols and recover the downlink 5GNR signaling and data. The SGNR network applications receive new uplink signaling and data from the user applications. The network applications process the uplink user signaling and the downlink SGNR signaling to generate new downlink user signaling and new uplink 5GNR signaling. The network applications transfer the new downlink user signaling and data to the user applications. The SGNR network applications process the new uplink 5GNR signaling and user data to generate corresponding uplink SGNR symbols that carry the uplink SGNR signaling and data.

In radio 701, the DSP processes the uplink SGNR symbols to generate corresponding digital signals for the analog-to-digital interfaces. The analog-to-digital interfaces convert the digital uplink signals into analog uplink signals for modulation. Modulation up-converts the uplink analog signals to their carrier frequency. The amplifiers boost the modulated uplink signals for the filters which attenuate unwanted out-of-band energy. The filters transfer the filtered uplink signals through duplexers to the antennas. The electrical uplink signals drive the antennas to emit corresponding wireless SGNR signals to 5G RAN 610 that transport the uplink SGNR signaling and data.

RRC functions comprise authentication, security, handover control, status reporting, QoS, network broadcasts and pages, and network selection. SDAP functions comprise QoS marking and flow control. PDCP functions comprise security ciphering, header compression and decompression, sequence numbering and re-sequencing, de-duplication. RLC functions comprise Automatic Repeat Request (ARQ), sequence numbering and resequencing, segmentation and resegmentation. MAC functions comprise buffer status, power control, channel quality, Hybrid ARQ (HARQ), user identification, random access, user scheduling, and QoS. PHY functions comprise packet formation/deformation, windowing/de-windowing, guard-insertion/guard-deletion, parsing/de-parsing, control insertion/removal, interleaving/de-interleaving, Forward Error Correction (FEC) encoding/decoding, channel coding/decoding, channel estimation/equalization, and rate matching/de-matching, scrambling/descrambling, modulation mapping/de-mapping, layer mapping/de-mapping, precoding, Resource Element (RE) mapping/de-mapping, Fast Fourier Transforms (FFTs)/Inverse FFTs (IFFTs), and Discrete Fourier Transforms (DFTs)/Inverse DFTs (IDFTs). Q-APP functions comprise authentication and quantum key requesting. Q-APP functions include quantum authentication request generation and quantum derived key storage.

In some examples, UE 601 may comprise a physical port detachably couplable to an authentication provisioning system of data registry 621 over a wired connection. UE 601 verifies its identity with edge data registry 621 over the wired connection to receive its quantum derived key. For example, the memory in user circuitry 702 may store a unique code that identifies UE 601 and UE 601 may transfer the unique code to data registry 621 or a secure proxy associated with data registry 621 over the wired connection. Once the identity of UE 601 is verified, UE 601 is provisioned with its quantum derived key. User circuitry 702 stores the key in memory. UE 601 uses the quantum derived key to authenticate itself to authenticate itself with, and attach to, enterprise network 620.

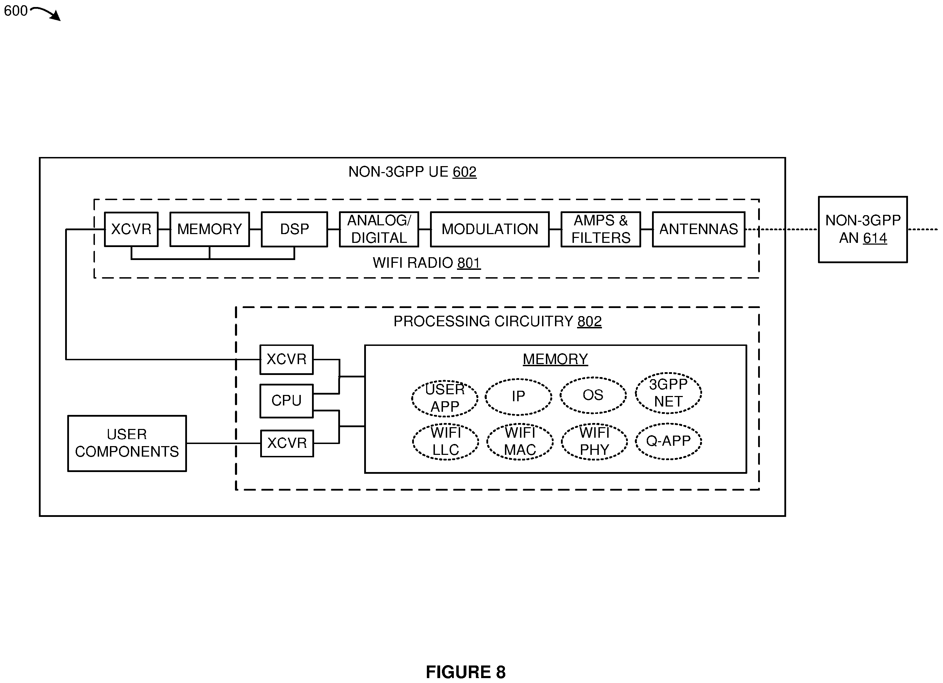

Figure 8 illustrates non-3GPP UE 602 in 5G communication network 600. UE 602 comprises an example of UE 311, although UE 311 may differ. UE 602 comprises WIFI radio 801 and processing circuitry 802. WIFI radio 801 comprises antennas, amplifiers, filters, modulation, analog-to-digital interfaces, DSP, memory, and transceivers that are coupled over bus circuitry. Processing circuitry 802 comprises memory, CPU, user interfaces and components, and transceivers (XCVRs) that are coupled over bus circuitry. The memory in processing circuitry 802 stores an operating system (OS) and network applications like Internet Protocol (IP), WIFI Physical Layer (PHY), WIFI Media Access Control (MAC), WIFI Logical Link Control (LLC), 3GPP Networking (3GPP NET), and Quantum Application (Q-APP). In some examples, the WIFI components of UE 602 may be omitted, and UE 601 may instead comprise an ENET device. For example, if UE 602 comprises an ENET device, UE 602 would comprise an ENET card and ENET networking application while WIFI radio 801 and WIFI network applications would not be present. However, it should be appreciated that non-3GPP UE 602 may comprise multiple types of non-3GPP communication systems. For example, UE 602 may comprise both WIFI and ENET communication systems.

The antennas in WIFI radio 801 are wirelessly coupled to non-3GPP access node 614 over a non-3GPP wireless link. Transceivers in WIFI radio 801 are coupled to transceivers in processing circuitry 802. The transceivers in processing circuitry 802 are coupled to user components like displays, controllers, and memory. The CPU in processing circuitry 802 executes the operating system, quantum application, and WIFI network applications to authenticate over, and exchange data with non-3GPP access node 614 over WIFI radio 801. UE 602 could also use other non-3GPP protocols like bluetooth, narrowband internet-of-things, ENET, and the like.

In some examples, UE 601 may comprise a physical port detachably couplable to an authentication provisioning system of data registry 621 over a secure wired connection. UE 601 verifies its identity with edge data registry 621 over the wired connection to receive its quantum derived key. For example, the memory in user circuitry 702 may store a unique code that identifies UE 601 and UE 601 may transfer the unique code to data registry 621 or a secure proxy associated with data registry 621 over the wired connection. Once the identity of UE 601 is verified, UE 601 is provisioned with its quantum derived key. User circuitry 702 stores the key in memory. UE 601 uses the quantum derived key to authenticate itself to authenticate itself with, and attach to, enterprise network 620.

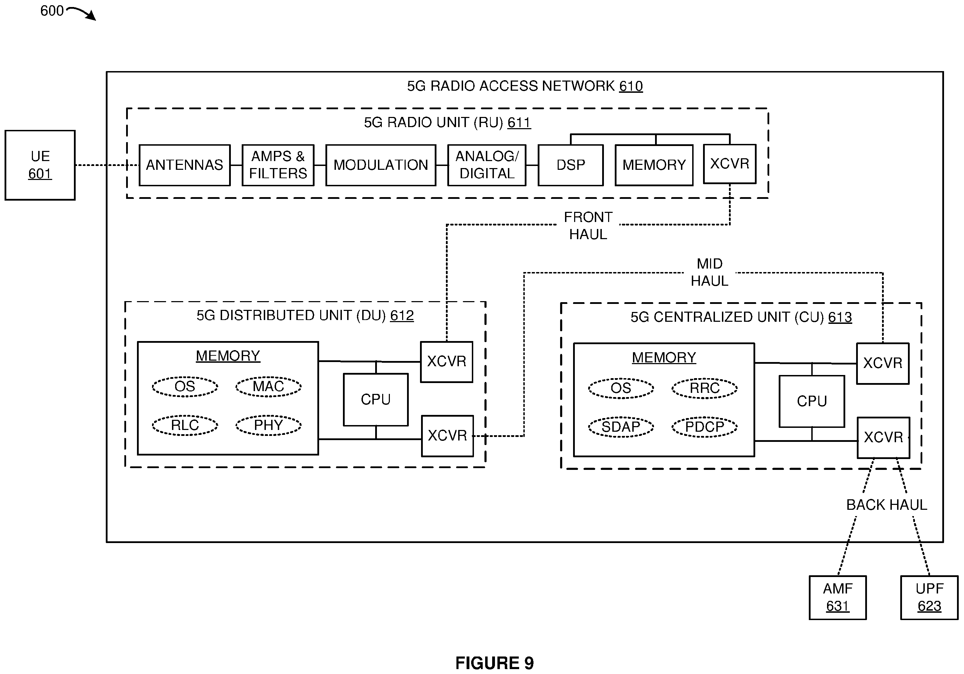

Figure 9 illustrates 5G RU 611, 5G DU 612, and 5G CU 613 in 5G communication network 600. RU 611, DU 612, and CU 613 comprise an example of the access nodes 311 and 312, although access nodes 311 and 312 may differ. RU 611 comprises antennas, amplifiers, filters, modulation, analog-to-digital interfaces, DSP, memory, and transceivers (XCVRs) that are coupled over bus circuitry. UE 601 is wirelessly coupled to the antennas in RU 611 over 3GPP SGNR links. Transceivers in 5G RU 611 are coupled to transceivers in 5GDU 612 over fronthaul links like enhanced Common Public Radio Interface (eCPRI). The DSPs in RU 611 executes their operating systems and radio applications to exchange SGNR signals with UE 601 and to exchange 5GNR data with DU 612.

For the uplink, the antennas receive wireless signals from UE 601 that transport uplink SGNR signaling and data. The antennas transfer corresponding electrical signals through duplexers to the amplifiers. The amplifiers boost the received signals for filters which attenuate unwanted energy. Demodulators down-convert the amplified signals from their carrier frequencies. The analog/digital interfaces convert the demodulated analog signals into digital signals for the DSPs. The DSPs transfer corresponding SGNR symbols to DU 612 over the transceivers.

For the downlink, the DSPs receive downlink SGNR symbols from DU 612. The DSPs process the downlink SGNR symbols to generate corresponding digital signals for the analog-to-digital interfaces. The analog-to-digital interfaces convert the digital signals into analog signals for modulation. Modulation up-converts the analog signals to their carrier frequencies. The amplifiers boost the modulated signals for the filters which attenuate unwanted out-of-band energy. The filters transfer the filtered electrical signals through duplexers to the antennas. The filtered electrical signals drive the antennas to emit corresponding wireless signals to 3GPP UE 601 that transport the downlink SGNR signaling and data.

DU 612 comprises memory, CPU, and transceivers that are coupled over bus circuitry. The memory in 5G DU 612 stores operating systems and 5GNR network applications like PHY, MAC, and RLC. CU 613 comprises memory, CPU, and transceivers that are coupled over bus circuitry. The memory in CU 613 stores an operating system and SGNR network applications like PDCP, SDAP, and RRC. Transceivers in 5G DU 612 are coupled to transceivers in RU 611 over front-haul links. Transceivers in DU 612 are coupled to transceivers in CU 613 over mid-haul links. A transceiver in CU 613 is coupled to network core 630 over backhaul links.

RLC functions comprise ARQ, sequence numbering and resequencing, segmentation and resegmentation. MAC functions comprise buffer status, power control, channel quality, HARQ, user identification, random access, user scheduling, and QoS. PHY functions comprise packet formation/deformation, guard-insertion/guard-deletion, parsing/de-parsing, control insertion/removal, interleaving/de-interleaving, FEC encoding/decoding, channel coding/decoding, channel estimation/equalization, and rate matching/de-matching, scrambling/descrambling, modulation mapping/de-mapping, layer mapping/de-mapping, precoding, RE mapping/de-mapping, FFTs/IFFTs, and DFTs/IDFTs. PDCP functions include security ciphering, header compression and decompression, sequence numbering and re-sequencing, de-duplication. SDAP functions include QoS marking and flow control. RRC functions include authentication, security, handover control, status reporting, QoS, network broadcasts and pages, and network selection.

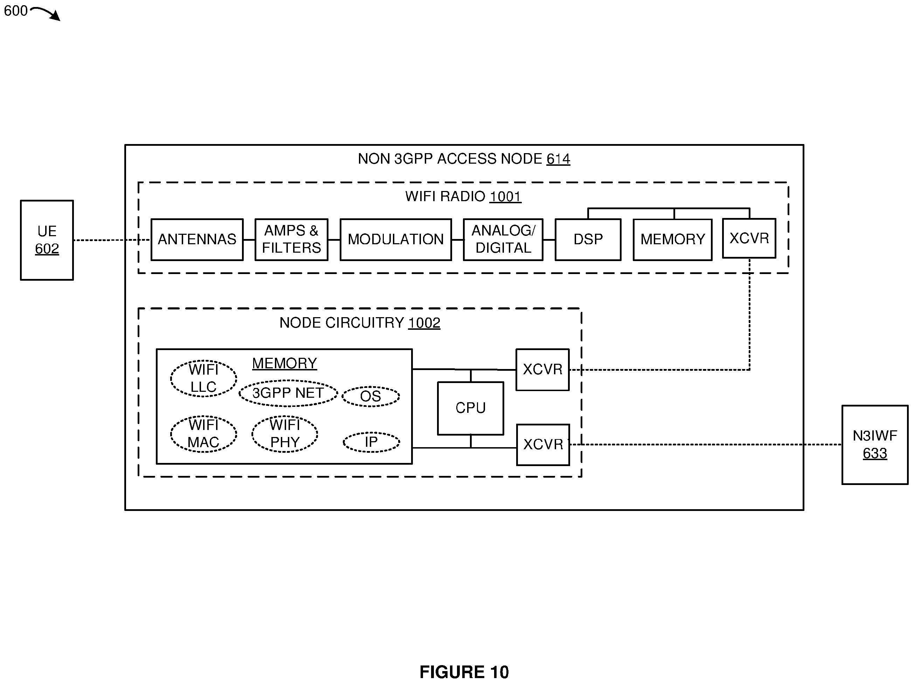

Figure 10 illustrates non-3GPP access node 614 in 5G communication network 600. Non-3GPP access node 614 comprises an example of the access nodes 312 and 312, although access nodes 312 and 312 may differ from this example. Non-3GPP access node 614 comprises WIFI radio 3001 and node circuitry 3002. Non-3GPP access node 614 may comprise a trusted access node or an untrusted access node. WIFI radio 3001 comprises antennas, amplifiers, filters, modulation, analog-to-digital interfaces, DSP, memory, and transceivers that are coupled over bus circuitry. Node circuitry 3002 comprises memory, CPU, and transceivers that are coupled over bus circuitry. The memory in node circuitry 3002 stores operating systems and network applications like WIFI PHY, WIFI MAC, WIFI LLC, IP, and 3GPP Networking (NET). Other wireless protocols like bluetooth and narrowband internet-of-things could be used.

The antennas in WIFI radio 3001 are wirelessly coupled to UE 602 over non-3GPP wireless links. Transceivers in WIFI radio 3001 are coupled to transceivers in node circuitry 3002. Transceivers in node circuitry 3002 are coupled to transceivers in N3IWF 633 over backhaul links. The CPU in node circuitry 3002 executes the operating system and network applications to exchange data and authentication signaling with UE 602.

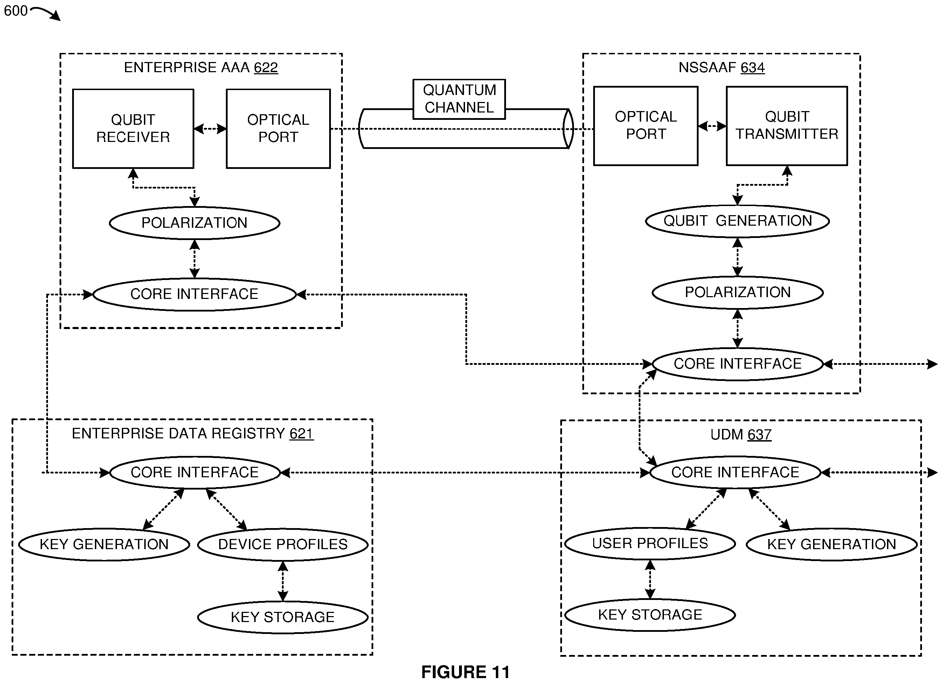

Figure 11 illustrates data registry 621, AAA server 622, NSSAAF 634, and UDM 637 in 5G communication network 600. Data registry 621 comprises an example of enterprise authentication circuitry 313, however authentication circuitry 313 may differ. AAA server 622 comprises an example of enterprise quantum circuitry 314, however quantum circuitry 314 may differ. NSSAAF 634 comprises an example of network quantum circuitry 334, however quantum circuitry 334 may differ. UDM 637 comprises an example of network authentication circuitry 333, however authentication circuitry 333 may differ. Data registry 621 comprises network applications for core interfacing, key generation, device profiles, and key storage. AAA server 622 comprises an optical port, a qubit receiver, and network applications for polarization and core interfacing. NSSAAF 634 comprises an optical port, a qubit receiver, and network applications for polarization, qubit generation, and core interfacing. UDM 637 comprises network applications for core interfacing, key generation, device profiles, and key storage. The quantum channel comprises optical links, vacuums, metallic links, quantum repeaters, and/or other types of links that can transmit quantum information.

In AAA server 622 and NSSAAF 634, the core interfaces exchange authentication requests to initiate QKD procedures and authentication information for key generation over secure communication channels. The secure communication channels may comprise a quantum capable fiber network to exchange both quantum information and classical information including quantum derived authentication keys. The core interfaces may encrypt/decrypt and transfer information using Fifth Generation Core (5GC) communication protocols like EAP between edge AAA server 622 and NSSAAF 634. NSSAAF 634 usually resides in 5G core network 630 at the service provider while AAA server 622 may reside in either enterprise network 620 or core network 630. The key generation applications in UDM 637 and data registry 621 generate quantum derived authentication keys for user devices based on the polarization states of the qubits. The polarization application in NSSAAF 634 selects polarization bases for the qubit transmitter. The polarization application in AAA server 622 selects measurement bases for the qubit receiver. The core interface applications in UDM 637 and data registry 621 exchange authentication keys for user devices and network data with other network functions in 5G core 630 and enterprise core 620.

In operation, the core interfaces in AAA server 622 and NSSAAF 634 exchange QKD requests to generate quantum derived keys for use by UEs to authenticate with enterprise network 620. In NSSAAF 634, the polarization application selects polarization bases and qubit values. The qubit generation application controls the qubit transmitter to generate and polarize the qubits using the indicated polarization bases and qubit values from the polarization application. The optical port couples to the quantum channel. The qubit transmitter transfers the polarized qubits to AAA server 622 via the optical port in NSSAAF 634 and the quantum channel. The core interfacing application indicates the selected polarization bases and qubit values to UDM 637.

The polarization application in AAA server 622 selects a set of measurement bases to measure the polarized qubits received from NSSAAF 634. The optical port in AAA server 622 receives the polarized qubit. The qubit receiver in AAA server 622 determines the polarizations of the qubits received from over the quantum channel using the measurement bases indicated by the polarization application. The core interfacing application in AAA server 622 indicates the measured polarizations to data registry 621.

The core interfaces in edge data registry 621 and UDM 637 exchange the polarization states measured by the qubit receiver in AAA 622, the polarization states selected by NSSAAF 634, and in some examples, a device identifier that will be associated with the quantum derived key. The key generation applications compare the determined polarization states with the encoded polarization states. The polarization applications identify qubits that have a determined polarization state that is the same as the encoded polarization state. Typically, around 50% of the qubits will have determined polarization states that match the encoded polarization states. The key generation applications generate an authentication key based on the values of qubits with matching polarization states. In some examples, when the percentage of matching qubits exceeds a threshold value (e.g., 45%), the key generation applications may determine the quantum channel was tampered with and direct AAA 622 and NSSAAF 634 to restart the QKD procedure. The key generation application in UDM 637 stores the quantum derived authentication key in association with a user profile. The key generation application in data registry 621 stores the quantum derived key in association with a device profile. Data registry 621 may provision the quantum derived key to a user device associated with enterprise network 620 for use by the user device to authenticate itself with enterprise network 620.

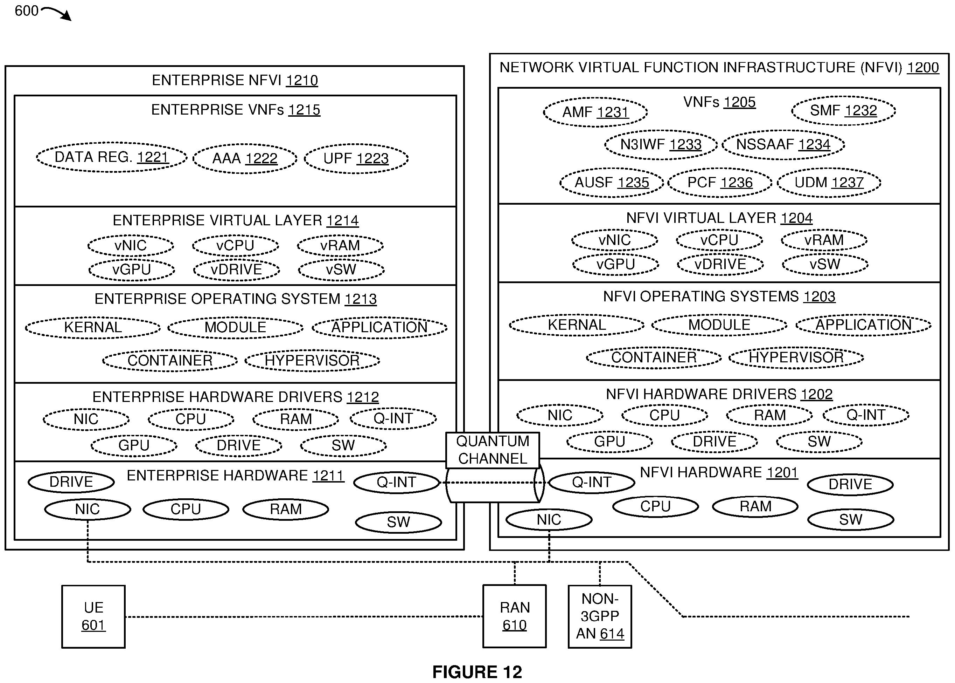

Figure 12 illustrates Network Function Virtualization Infrastructure (NFVI) 1200 and edge enterprise NFVI 1210 in 5G communication network 600. NFVI 1200 comprises an example of core network 130 and network data system 330, although core network 130 and network data system 330 may vary from this example. Enterprise NFVI 1210 comprises an example of enterprise network 150 and 310, although enterprise networks 150 and 310 may differ. NFVI 1200 comprises NFVI hardware 1201, NFVI hardware drivers 1202, NFVI operating systems 1203, NFVI virtual layer 1204, and NFVI Virtual Network Functions (VNFs) 1205. NFVI hardware 1201 comprises Network Interface Cards (NICs), Quantum Interface System (Q-INT), CPU, GPU, RAM, Flash/Disk Drives (DRIVE), and Data Switches (SW). NFVI hardware drivers 1202 comprise software that is resident in the NIC, Q-INT, CPU, GPU, RAM, DRIVE, and SW. NFVI operating systems 1203 comprise kernels, modules, applications, containers, hypervisors, and the like. NFVI virtual layer 1204 comprises vNIC, vCPU, vGPU, vRAM, vDRIVE, and vSW. NFVI VNFs 1205 comprise AMF 1231, SMF 1232, N3IWF 1233, NSSAAF 1234, AUSF 1235, PCF 1236, and UDM 1237. Additional VNFs and network elements like User Plane Function, Network Slice Selection Function (NSSF), Unified Data Registry (UDR), and Network Exposure Function (NEF) are typically present but are omitted for clarity. NFVI 1200 may be located at a single site or be distributed across multiple geographic locations. The NIC in NFVI hardware 1201 is coupled to 5G RAN 610, non-3GPP AN 614, a NIC in enterprise hardware 1211, and to external systems. The Q-INT in NFVI hardware 1201 is coupled to a Q-INT in enterprise hardware 1211 over a quantum channel. NFVI hardware 1201 executes NFVI hardware drivers 1202, NFVI operating systems 1203, NFVI virtual layer 1204, and NFVI VNFs 1205 to form AMF 631, SMF 632, N3IWF 633, NSSAAF 634, AUSF 635, PCF 636, and UDM 637.

Enterprise NFVI 1210 comprises enterprise hardware 1211, enterprise hardware drivers 1212, enterprise operating systems 1213, enterprise virtual layer 1214, and enterprise VNFs 1215. Enterprise hardware 1211 comprises NICs, Q-INT, CPU, GPU, RAM, DRIVE, and SW. Enterprise hardware drivers 1212 comprise software that is resident in the NIC, Q-INT CPU, GPU, RAM, DRIVE, and SW. Enterprise operating systems 1213 comprise kernels, modules, applications, containers, hypervisors, and the like. Enterprise virtual layer 1214 comprises vNIC, vCPU, vGPU, vRAM, vDRIVE, and vSW. Enterprise VNFs 1215 comprise data registry 1221, AAA 1222, and UPF 1223. Enterprise NFVI 1210 may be located at a single site or be distributed across multiple geographic locations. The NIC in enterprise hardware 1211 is coupled to a NIC in NFVI hardware 1201, RAN 610, and non-3GPP access node 614. The Q-INT in enterprise hardware 1211 is coupled to a Q-INT in NFVI hardware 1201 over a quantum channel. Enterprise hardware 1211 executes edge enterprise hardware drivers 1212, enterprise operating systems 1213, enterprise virtual layer 1214, and enterprise VNFs 1215 to form the data registry 621, AAA 622, and UPF 623.

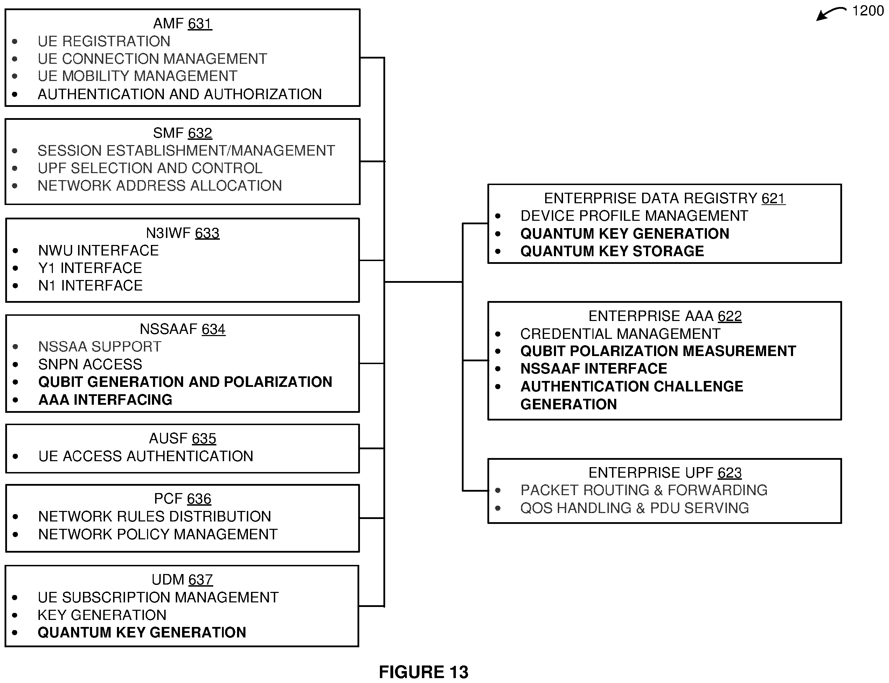

Figure 13 further illustrates NFVI 1200 and enterprise NFVI 1210 in 5G communication network 600. AMF 631 performs UE registration, UE connection/mobility management, and UE authentication and authorization. SMF 632 performs session establishment and management, UPF selection and control, and network address allocation. N3IWF 633 performs NWu interfacing, Y1 interfacing, and N1 interfacing. NSSAAF 634 performs NSSAA support, SNPN access, qubit generation and polarization, and AAA interfacing. AUSF 635 performs UE access authentication. PCF 636 performs network policy management and network rules distribution. UDM 637 performs UE subscription management, key generation, and quantum key generation. Data registry 621 performs device profile management, quantum key generation, and quantum key storage. AAA 622 performs credential management, qubit polarization measurement, and NSSAAF interfacing. UPF 623 performs packet routing & forwarding, QoS handling, and PDU interconnection and serving.

In operation, AAA 622 transfers a QKD request for delivery to UDM 637 over a secure communication channel. UDM 637 accepts the QKD request and directs quantum capable NSSAAF 634 to participate in the QKD procedure with AAA server 622. NSSAAF 634 selects a set of polarization bases to polarize qubits. NSSAAF 634 indicates the selected set of polarization bases and corresponding qubit values to UDM 637. NSSAAF 634 generates and polarizes a set of qubits using the set of polarization bases. NSSAAF 634 transfers the polarized qubits over a quantum channel to AAA 622. AAA 622 receives the polarized qubits generated by NSSAAF 634. AAA 622 selects a measurement basis for each of the qubits received over the quantum channel. AAA 622 indicates the measured polarizations of the received qubits to data registry 621. UDM 637 and data registry 621 exchange cryptography information over the secure communication link that includes the qubit values, the selected polarization bases, and the measured polarization bases over a secure communication channel. UDM 637 and data registry 621 generate a quantum derived authentication key based on the values of qubits where the measured polarization matches selected polarization. Data registry 621 provisions UE 602 with a copy of the quantum derived authentication key over a secure and authenticated communication link. Data registry 621 stores a corresponding copy of the key in subscriber profile for UE 602.

AMF 631 receives attachment signaling from UE 602 via non-3GPP access node 614 and N3IWF 633. The attachment signaling comprises a registration request that indicates a request to attach to enterprise network 620. AMF 631 transfers an identity request for delivery to UE 602 via N3IWF 633 and non-3GPP access node 614. AMF 631 receives an identify indication from UE 602 via non-3GPP access node 614 and N3IWF 633. AMF 631 selects AUSF 635 to authenticate UE 602 for wireless services on enterprise network 620. AMF 631 transfers an authentication request for UE 602 to AUSF 635. AUSF 635 detects the enterprise network service request and in response, selects NSSAAF 634 to resolve the request. AUSF 635 transfers the authentication request for UE 602 to NSSAAF 634. NSSAAF 634 processes the authentication request and determines AAA 622 is the credential holder associated with the identity indication from UE 602. NSSAAF 634 transfers the authentication request message with an EAP extension to AAA server 622. AAA server 622 receives the request and responsively retrieves authentication keys for UE 602 from data registry 621.

AAA 622 generates an expected result based on the quantum derived authentication key for UE 602 and a random number. AAA 622 transfers the random number and the expected result for UE 602 to NSSAAF 634. NSSAAF 634 forwards the random number and the expected result to AUSF 635 which in turn forwards the information to AMF 631. AMF 631 indicates the authentication method and transfers the random number for delivery to UE 602 via N3IWF 633 and access node 614. AMF 631 receives an authentication challenge response from UE 602. AMF 631 matches the expected result with the challenge response to authenticate the identity of UE 602. N3IWF 633 and AAA 622 comprise a trusted relationship and both entities are mutually authenticated. In doing so, the information transferred over the interface provided by N3IWF 633 comprises confidentiality, integrity, and is replay protected.

Responsive to the authentication and authorization, AMF 631 requests UE context for UE 602 from UDM 637. UDM 637 transfers UE context for UE 602 to AMF 631. The UE context comprises QoS metrics, slice identifiers, network addresses, and the like. AMF 631 retrieves service policies for UE 602 from PCF 636. AMF 631 selects SMF 632 to establish a Protocol Data Unit (PDU) session for UE 602 based on the UE context and the service policies. SMF 632 selects UPF 623 to establish the data session for UE 602. SMF 632 transfers session context for the data session to AMF 631. AMF 631 transfers the session context to UE 602 over non-3GPP access node 614 and N3IWF 633. UPF 623 exchanges user date with UE 602 over access node 614. UPF 623 exchanges the user data with data network 624.

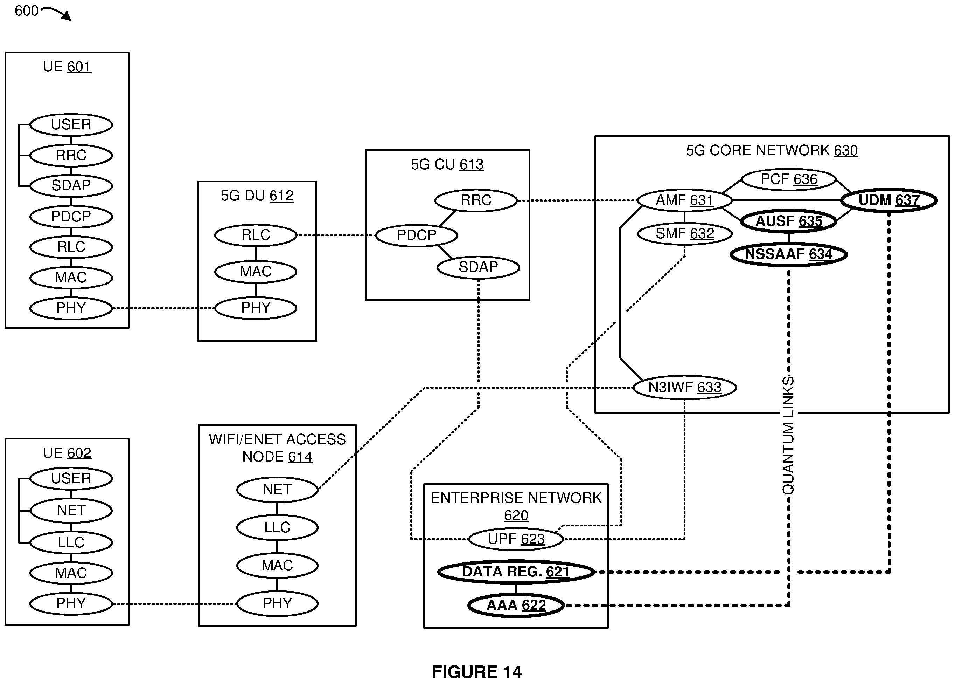

Figure 14 illustrates an exemplary operation of 5G communication network 600 to perform quantum authentication for 3GPP UE 601. The operation may vary in other examples. In operation, AAA 622 initiates a QKD procedure with UDM 637. UDM 637 directs NSSAAF 634 to participate in the QKD procedure with AAA 622. NSSAAF 634 generates entangled pairs of qubits. NSSAAF 634 polarizes the entangled pairs of qubits according to the selected polarization basis for individual pairs of the qubits. NSSAAF 634 transfers a polarized qubit from each entangled pair to AAA 622 over the quantum channel. NSSAAF 634 indicates the selected polarization bases and qubit values to UDM 637.

AAA 622 selects a measurement basis for each of the individual qubits received from NSSAAF 634. AAA 622 measures the polarization states of the received qubits using the selected measurement bases for each of the received qubits. AAA 622 indicates the determined polarizations of the received qubits to data registry 621. Data registry 621 and UDM 637 generate a quantum derived authentication based on the determined polarizations and selected polarizations of the qubits. Enterprise network 620 provisions UE 601 with the quantum authentication key for UE 601 to use when authenticating on network 620. Data registry 621 stores the key in association with a device profile for UE 601.

A user application in UE 601 executes. In response, the RRC in UE 601 wirelessly attaches to the RRC in CU 613 and transfers attachment signaling to the RRC in CU 613 over the PDCPs, RLCs, MACs, and PHYs. The attachment signaling comprises a service request on enterprise network 620. The RRC in CU 613 establishes a Radio Resource Control (RRC) connection with the RRC in UE 601 over the PDCPs, RLCs, MACs, and PHYs. The RRC in CU 613 transfers a registration request for UE 601 to AMF 631. AMF 631 transfers an identity request for UE 601 to the RRC in CU 613. The RRC in CU 613 forwards the identity request to the RRC in UE 601 over the PDCPs, RLCs, MACs, and PHYs. In response, the RRC in UE 601 indicates its identity to the RRC in CU 613 over the PDCPs, RLCs, MACs, and PHYs. The RRC in CU 613 forwards the indication to AMF 631. AMF 631 identifies UE 601 and selects AUSF 635 to authenticate UE 601. AMF 631 transfers an authentication request for UE 601 to AUSF 635.

AUSF 635 detects the service request for enterprise network 620. In response, AUSF 635 selects NSSAAF 634 to resolve the enterprise network authentication request from UE 601. NSSAAF 634 processes the authentication request and identifies AAA 622 as the credential holder for the UE identify indicated by UE 601. NSSAAF 634 transfers the authentication request for UE 601 to AAA 622. AAA 622 retrieves the quantum authentication key for UE 601 from data registry 621. AAA 622 generates an expected result for UE 601 using the quantum authentication key and a random number. AAA 622 transfers the expected result and the random number to NSSAAF 634. NSSAAF 634 forwards the expected result and the random number to AUSF 635 which in turn, forwards the expected result and the random number to AMF 631. AMF 631 stores the expected result from AUSF 635 and transfers the random number to the RRC in CU 613. The RRC in CU 613 forwards the indication to the RRC in UE 601 over the PDCPs, RLCs, MACs, and PHYs. The RRC in UE 601 hashes the quantum authentication key and the random number to generate the same expected result. The RRC in UE 601 transfers the expected result to the RRC in CU 613 over the PDCPs, RLCs, MACs, and PHYs. The RRC in CU 613 forwards the expected result to AMF 631. AMF 631 matches the expected result from UE 601 with expected result from AUSF 635 to authenticate the identity of UE 601.

Responsive to the authentication and authorization, AMF 631 retrieves UE context for UE 601 from UDM 637 and retrieves service policies for UE 601 from PCF 636. AMF 631 selects SMF 632 to establish a PDU session for UE 601 based on the UE context and the service policies. SMF 632 selects UPF 623 to establish the PDU session for UE 601 based on the UE context. SMF 632 transfers session context for the PDU session to AMF 631. AMF 631 transfers the session context to the RRC in CU 613. The RRC in CU 613 forwards the session context to the RRC in UE 601 over the PDCPs, RLCs, MACs, and PHYs. The RRC in UE 601 directs the SDAP to use the context to initiate the PDU session. The SDAP in UE 601 exchanges user data with the SDAP in CU 613 over the PDCPs, RLCs, MACs, and PHYs. The SDAP in CU 613 exchanges user data with UPF 623. UPF 623 exchanges the user data with external systems.

The wireless data network circuitry described above comprises computer hardware and software that form special-purpose network circuitry to perform quantum authentication for 3GPP and non-3GPP UEs. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose network circuitry to perform quantum authentication for 3GPP and non-3GPP LTEs.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents.

## Claims

1. A method of operating a wireless communication network (300) to perform quantum authentication for a wireless user device (301), the method comprising:
exchanging cryptography information indicating selected polarization states, measured polarization states, and a wireless device Identifier, ID, with an enterprise network (310);
generating a cryptography key based on the selected polarization states and the measured polarization states;
storing the cryptography key in association with the wireless device ID;
receiving an attachment request from the wireless user device;
generating an authentication challenge for the wireless user device based on the cryptography key;
transferring the authentication challenge to the user device;
utilizing the cryptography key to validate an authentication response received from the user device; and
authenticating the user device in response to the validation.

2. The method of claim 1 further comprising:
in response to authenticating the user device, providing a wireless data service to the wireless user device.

3. The method of claim 2 further comprising:
selecting polarization states for qubits;
polarizing the qubits using the selected polarization states; and
transferring the qubits to an enterprise network.

4. The method of claim 1 wherein:
generating and polarizing the qubits using the selected polarization states comprises generating entangled qubit pairs and polarizing the entangled qubit pairs using the selected polarization states; and
transferring the qubits to the enterprise network comprises transferring one of the entangled qubits from each of the entangled qubit pairs to the enterprise network.

5. The method of claim 1 wherein transferring the qubits to the enterprise network comprises transferring the qubits over metallic links, glass links, or free space links.

6. The method of claim 1 wherein:
exchanging the cryptography information indicating the selected polarization states, the measured polarization states, and the wireless device ID with the enterprise network comprises exchanging the cryptography information over a secure communication link.

7. A wireless communication network (300) configured to perform quantum authentication for a wireless User Equipment, UE, (301) the wireless communication network comprising:
network quantum circuitry (334) configured to:
select polarization states for qubits;
generate and polarize the qubits using the selected polarization states; and
transfer the qubits to an enterprise network (310); and
network authentication circuitry configured (333) to:
exchange cryptography information indicating the selected polarization states, measured polarization states, and a wireless device Identifier, ID, with the enterprise network;
generate a cryptography key based on the selected polarization states and the measured polarization states; and
store the cryptography key in association with the wireless device ID.

8. The wireless communication network of claim 7 wherein:
the network authentication circuitry is further configured to:
receive an attachment request from the wireless user device;
generate an authentication challenge for the wireless user device based on the cryptography key;
transfer the authentication challenge to the wireless user device;
utilize the cryptography key to validate an authentication response received from the wireless user device; and
authenticate the user device in response to the validation;
the wireless communication network further comprising network data circuitry configured to provide a wireless data service to the wireless user device in response to the authentication of the user device.

9. The wireless communication network of claim 7 wherein the network quantum circuitry is configured to:
generate entangled qubit pairs,
polarize the entangled qubit pairs using the selected polarization states; and
transfer one of the entangled qubits from each of the entangled qubit pairs to the enterprise network.

10. The wireless communication network of claim 7 wherein the network quantum circuitry is configured to:
transfer the qubits to the enterprise network over metallic links, glass links, or free space links.

11. The wireless communication network of claim 7 wherein the network authentication circuitry is configured to:
exchange the cryptography information indicating the selected polarization states, the measured polarization states, and the wireless device ID with the enterprise network over a secure communication link.

12. A method of operating a wireless communication network (300) to perform quantum authentication for a wireless user device (301), the method comprising:
selecting polarization states for qubits;
generating and polarizing the qubits using the selected polarization states;
transferring the qubits to an enterprise network (310);
exchanging cryptography information indicating the selected polarization states, measured polarization states, and a wireless device Identifier, ID, with the enterprise network;
generating a cryptography key based on the selected polarization states and the measured polarization states; and
storing the cryptography key in association with the wireless device ID.

13. The method of claim 12 further comprising:
receiving an attachment request from the wireless user device;
generating an authentication challenge for the wireless user device based on the cryptography key;
transferring the authentication challenge to the wireless user device;
utilizing the cryptography key to validate an authentication response received from the wireless user device;
authenticating the user device in response to the validation; and
in response to authenticating the user device, providing a wireless data service to the wireless user device.

14. The method of claim 12 wherein:
generating and polarizing the qubits using the selected polarization states comprises generating entangled qubit pairs and polarizing the entangled qubit pairs using the selected polarization states; and
transferring the qubits to the enterprise network comprises transferring one of the entangled qubits from each of the entangled qubit pairs to the enterprise network over metallic links, glass links, or free space links.

15. The method of claim 12 wherein:
exchanging the cryptography information indicating the selected polarization states, the measured polarization states, and the wireless device ID with the enterprise network comprises exchanging the cryptography information over a secure communication link.
